# EUROPÄISCHE PATENTSCHRIFT

(11) **EP 2 956 520 B1**
(45) Veröffentlichungstag und Bekanntmachung des Hinweises auf die Patenterteilung: **06.11.2019**
(21) Anmeldenummer: 14702047.3
(22) Anmeldetag: 03.02.2014
(51) Int. Cl.: C23F 11/08, C09K 5/10, C09K 5/20

(54) **GEFRIERSCHUTZMITTEL-KONZENTRAT MIT KORROSIONSSCHUTZ UND DARAUS HERGESTELLTE WÄSSRIGE KÜHLMITTELZUSAMMENSETZUNG**
ANTI-FREEZE CONCENTRATE HAVING CORROSION PROTECTION AND AQUEOUS COOLANT COMPOSITION PRODUCED THEREFROM
CONCENTRÉ D'ANTIGEL AVEC PROTECTION ANTI-CORROSION ET COMPOSITION DE LIQUIDE DE REFROIDISSEMENT AQUEUX PRÉPARÉE À PARTIR DE CE CONCENTRÉ

(30) Priorität: 13.02.2013 EP 13155014
(43) Veröffentlichungstag der Anmeldung: 23.12.2015
(73) Patentinhaber: BASF SE, 67056 Ludwigshafen am Rhein (DE)
(72) Erfinder: DIETL, Harald, 67063 Ludwigshafen (DE); NITZSCHKE, Uwe, 67071 Ludwigshafen (DE); WEISS, Gerhard, 67063 Ludwigshafen (DE)
(74) Vertreter: BASF IP Association
(86) Internationale Anmeldenummer: PCT/EP2014/051988
(87) Internationale Veröffentlichungsnummer: WO 2014/124826

(56) Entgegenhaltungen:
- WO-A1-99/61545
- WO-A1-2006/092376
- WO-A2-2009/111443
- JP-A- H09 227 425
- JP-A- H10 237 432
- JP-A- S62 115 081
- JP-A- 2000 239 868
- US-A- 5 080 818
- US-A- 5 347 008
- US-B1- 6 309 697

## Beschreibung

Die vorliegende Erfindung betrifft ein neues Gefrierschutzmittel-Konzentrat auf Basis von gefrierpunktserniedrigenden Flüssigkeiten als Hauptbestandteil, speziellen schwefelhaltigen organischen Verbindungen als Korrosionsschutzmitteln sowie weiteren hiervon verschiedenen Korrosionsschutzmitteln. Dieses Gefrierschutzmittel-Konzentrat ist für Kühlmittel, beispielsweise für Verbrennungsmotoren, und für Wärmeträgerflüssigkeiten geeignet. Weiterhin betrifft die vorliegende Erfindung eine daraus hergestellte wässrige Kühlmittelzusammensetzung. Weiterhin betrifft die vorliegende Erfindung die Verwendung dieser wässrigen Kühlmittelzusammensetzung zur Kühlung eines Verbrennungsmotors, dessen Kühlvorrichtung aus Aluminium durch Löten mit einem Fluoroaluminat-Flussmittel hergestellt worden ist. Weiterhin betrifft die vorliegende Erfindung die Verwendung bestimmter schwefelhaltiger organischer Verbindungen als Korrosionsschutzmittel in derartigen Gefrierschutzmittel-Konzentraten und wässrigen Kühlmittelzusammensetzungen generell.

Kühlmittelzusammensetzungen für die Kühlvorrichtungen (die üblicherweise als Kühlkreisläufe ausgebildet sind) von Verbrennungsmotoren von beispielsweise Automobilen enthalten meistens Alkylenglykole wie Monoethylenglykol oder Monopropylenglykol, gegebenenfalls im Gemisch mit Glycerin, als Gefrierschutzkomponente, welche den Gefrierpunkt der Kühlmittelzusammensetzung erniedrigt. Neben weiteren Komponenten wie Entschäumern, Farbstoffen oder Bitterstoffen sind insbesondere Korrosionsschutzmittel (Korrosionsinhibitoren) enthalten.

Vor allem in modernen Verbrennungsmotoren werden Temperaturbelastungen erreicht, die hohe Anforderungen an die verwendeten Materialen stellen. Jede Art und jegliches Ausmaß von Korrosion stellen dabei einen potentiellen Risikofaktor dar, der zur Verkürzung der Lebensdauer des Motors und zur Erniedrigung der Zuverlässigkeit führen kann. Weiterhin werden in modernen Motoren zunehmend eine Vielzahl von unterschiedlichen Materialien verwendet, beispielsweise Gusseisen, Kupfer, Messing, Weichlot, Stahl sowie Aluminium, Aluminiumlegierungen und Magnesiumlegierungen. Durch diese Vielzahl an metallischen Materialien entstehen zusätzlich potentielle Korrosionsprobleme, insbesondere an den Stellen, an denen verschiedene Metalle in Kontakt miteinander stehen. Es können insbesondere an solchen Stellen vergleichsweise leicht die unterschiedlichsten Korrosionsarten wie Lochfraßkorrosion, Spaltkorrosion, Erosion oder Kaviatation auftreten. Ebenso müssen die Kühlmittelzusammensetzungen auch mit nicht-metallischen Bestandteilen der Kühlvorrichtungen, beispielsweise Elastomeren und Kunststoffen aus Schlauchverbindungen oder Dichtungen, verträglich sein und dürfen diese nicht verändern. Weiterhin ist auch die Art der Kühlmittelzusammensetzung bei der Wärmeübertragung in modernen Verbrennungsmotoren von entscheidender Bedeutung.

Seit einiger Zeit werden die Kühlvorrichtung bzw. Kühlkreisläufe für Verbrennungsmotoren, die meist im Fahrzeug- und Automobilbau, aber auch für stationäre Motoren eingesetzt werden, überwiegend oder alleinig aus Aluminium oder Aluminiumlegierungen hergestellt. Dabei kommen spezielle Lötverfahren, beispielsweise solche unter Schutzgasatmosphäre, zum Einsatz. Bei derartigen Lötverfahren ist die Mitverwendung eines Flussmittels erforderlich. Üblicherweise werden hierbei Kaliumfluoroaluminate als Flussmittel verwendet, beispielsweise ein Gemisch aus KAlF₄, K₂AlF₅ und K₃AlF₆ (zum Beispiel im Handel unter der Bezeichnung Nocolok® erhältlich).

Ein Teil der genannten Flussmittel verbleibt nach dem Lötvorgang auf der Oberfläche der Kühlvorrichtung haften. Diese Flussmittelrückstände in der Kühlvorrichtung führen nach dem Einfüllen von wässrigen Kühlmittelzusammensetzungen und Inbetriebnahme des Motors über eine Kette von im Gleichgewicht miteinander stehenden chemischen Reaktionen mit dem Wasser und den Inhaltsstoffen der wässrigen Kühlmittelzusammensetzungen mehr oder weniger rasch zur Ausfällung von Aluminiumhydroxid-Gelen und damit zur Verschlammung des Kühlkreislaufes. Dadurch werden die Effektivität der Wärmeabfuhr aus dem Motor und als Folge davon auch die Funktionen des Heizungswärmetausches, der Ladeluftkühlung und der Getriebeölkühlung stark eingeschränkt. Darüber hinaus wird durch die Gegenwart der Aluminiumhydroxid-Gele der Korrosionsschutz des Kühlmittels negativ beeinflusst, weil in der Folge durch Adsorption der Korrosionsinhibitoren an die Aluminiumhydroxid-Gele die Korrosionsschutzwirkung beträchtlich verringert wird.

Aus der WO 2009/111443 A2 sind Wärmeübertragungsflüssigkeiten auf Basis von Alkoholen bekannt, die in Wärmeüberträgervorrichtungen eingesetzt werden können, welche unter Verwendung von Kaliumfluoroaluminat-Flussmitteln gelötete Aluminiumbauteile enthalten. Für diese Wärmeübertragungsflüssigkeiten werden eine ganze Reihe von möglichen einzelnen Korrosionsschutzmittel anorganischer oder organischer Natur wie Molybdate, Wolframate, Vanadate, Phosphate, Antimonate, Nitrate, Nitrite, Borate, Azole oder Carboxylate empfohlen. Als verwendbares schwefelhaltiges Azole wird 2-Mercaptobenzthiazol (MTB) genannt. In der Tabelle 1 wird als Basis-Kühlmittel-konzentrat eine Formulierung (I) auf Basis von Monoethylenglykol mit >94 Gew.-% Ethylenglykol, 0,1-0,3 Gew.-% Tolyltriazol, 0,2-0,5 Gew.-% Nitrat, 0,04-0,1 Gew.-% Molybdat, 0,1-2,0 Gew.-% Borax, 0,1-0,5 Gew.-% Phosphorsäure, <0,3 Gew.-% MBT, 0,1-0,5 Gew.-% Silikat und 0,4-2,0 Gew.-% NaOH/KOH aufgeführt, wobei MBT für Mercaptobenzthiazol stehen könnte aber nicht muss, da keine Erklärung zu MBT angegeben ist.

US 5080818 offenbart Gefrierschutzmittel aus Glykol, Wasser und einem Korrosionsschutzmittel, welches das Kühlwasser in einem Verbrennungsmotor mit Flüssigkeitskühlung vor dem Gefrieren schützt. Des Weiteren ist die Problemstellung des Korrosionsschutzes von Aluminiumteilen in Automobilen angeführt. Explizit offenbart wird eine Zusammensetzung enthaltend Mercaptobenzthiazol bzw. dessen Natriumsalz.

WO 99/61545 A1 offenbart eine Gefrierschutzmittelformulierung zur Hemmung und Verhinderung der Erosion und Korrosion von Aluminium und anderen Metallen, die wäßrigen Flüssigkeiten in Kraftfahrzeugkühlsystemen ausgesetzt sind. Mercaptobenzthiazol bzw. dessen Natriumsalz werden als Korrosionsschutzmittel erwähnt.

WO 2006/092376 A1 offenbart glycerinhaltige Gefrierschutzmittel-/Korrosionsschutzkonzentrate, die als eine Komponente Heterocyclen enthalten können, u.a. Benzthiazol, und eine günstige Wirkung auf die Aluminiumkorrosion zeigen.

US 6309697 beschreibt den vorübergehenden Schutz von Metalloberflächen vor Korrosion mit Hilfe von Öl in Wasser-Emulsionen, die wasserlösliche Salze von Benzothiazolylthiocarbonsäuren enthalten. Als Metalloberflächen werden jedoch lediglich solche von Stahl beschrieben, eine Verwendung in Kühlerschutzmittel wird nicht erwähnt.

US 5347008 beschreibt Thio(cyclo)alkanpolycarbonsäuren und deren Verwendung als Korrosionsinhibitoren besonders für Eisenmetalle, wobei jedoch auch eine Wirkung auf Aluminium und Kupfer erwähnt wird.

Bislang ist jedoch keine adäquate Kühlmittelzusammensetzung mit Korrosionsschutz für Verbrennungsmotoren aufgefunden worden, das den Anforderungen hinsichtlich einer erhöhten Flussmitteltoleranz bei Einsatz in mit den genannten Flussmitteln gelöteten Aluminiumkühlvorrichtungen tatsächlich gerecht wird. Aufgabe der vorliegenden Erfindung war es daher, ein Gefrierschutzmittelkonzentrat mit Korrosionsschutz bereitzustellen, aus dem eine wässrige Kühlmittelzusammensetzung erhalten werden kann, welche gegenüber Rückständen von Fluoroaluminat-Flussmitteln in gelöteten Aluminumkühlern eine höhere Toleranz aufweist, d.h. welche nicht mehr oder deutlich weniger zu Ausfällungen von Aluminiumhydroxid-Gelen und zur Verschlammung des Kühlkreislaufes neigt und damit eine effektiveren Korrosionsschutz ermöglicht.

Demgemäß wurde ein Gefrierschutzmittel-Konzentrat mit Korrosionsschutz, geeignet für Kühlmittel und Wärmeträgerflüssigkeiten, gefunden, welches
(A) als Hauptbestandteil mindestens eine gefrierpunktserniedrigende Flüssigkeit ausgewählt aus einwertigen, zweiwertigen und dreiwertigen Alkoholen, Polyhydroxyalkoholen, deren Ethern und Mischungen hieraus;
(B) mindestens eine schwefelhaltige organische Verbindung ausgewählt aus
   mindestens einem 2-Thiothiazol der allgemeinen Formel I 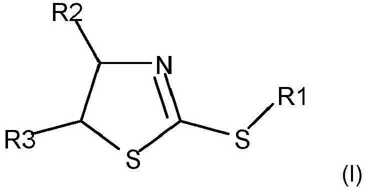 in der die Variable R1 einen Carboxyalkylrest der Formel -(CₘH₂ₘ)-COOX, wobei m für eine Zahl von 1 bis 4 steht und X Wasserstoff, ein Alkalimetallkation, ein Ammoniumkation oder ein substituiertes Ammoniumkation bedeutet, und die Variablen R2 und R3 unabhängig von-einander Wasserstoff oder eine C₁- bis C₄-Alkylgruppe bezeichnen, wobei R2 und R3 auch zusammen mit den beiden Ringkohlenstoffatomen des Thiazolringes, an die sie angeknüpft sind, einen fünf- oder sechsgliedrigen gesättigten oder ungesättigten Ring ausbilden können und
   (B3) schwefelhaltigen aliphatischen Carbonsäure, als Korrosionsschutzmittel;
(C) mindestens ein anorganisches Molybdatsalz als weiteres Korrosionsschutzmittel;
(D) mindestens ein anorganisches Phosphatsalz als weiteres Korrosionsschutzmittel;
(E1) mindestens eine lineare oder verzweigtkettige aliphatische oder cycloaliphatische Monocarbonsäure in Form derer Alkalimetall-, Ammonium- oder sub-stituierten Ammoniumsalze mit 3 bis 16 Kohlenstoffatomen im Säureteil, enthält.

Die Gefrierschutzkomponente (A), welche den Hauptbestandteil des erfindungsgemäßen Gefrierschutzmittel-Konzentrates darstellt und damit in der Regel mehr als 50 Gew.-% des Konzentrates ausmacht, sorgt bei Inbetriebnahme des Verbrennungsmotors mit einer daraus erzeugte Kühlmittelzusammensetzung in einer Umgebung von deutlich unter 0°C für einen problemlosen Start des Motors und danach beim Betrieb des Motors für ein gutes Fließverhalten und eine gute Wärmeabfuhr. Als ein-, zwei- oder dreiwertige Alkohole, Polyhydroxyalkohole und deren Ether eignen sich für die Komponente (A) beispielsweise Methanol, Ethanol, n- und isoPropanol, n-, iso- und sek. Butanol, Furfurol, Tetrahydrofurfurylalkohol, ethoxylierter Furfurylalkohol, Alkoxyalkanole wie Methoxyethanol, Monoethylenglykol, Monopropylenglykol, Diethylenglykol, Dipropylenglykol, Triethylenglykol, Tripropylenglykol, Tetraethylenglykol, Tetrapropylenglykol, Pentaethylenglykol, Pentapropylenglykol, Hexaethylenglykol, Hexapropylenglykol, Glycerin, Sorbitol, Mannit, Diglycerol, Threit, Erythrit, Adonit (Ribit), Arabit (Lyxit), Xylit, Dulcit (Galactit), Maltit, Isomalt, 1,2,6-Hexantriol, Trimethylolpropan, Trimethylolethan, Pentaerythrit, sowie Monoether von Glykolen wie Methyl-, Ethyl-, Propyl- und Butylether, unter letzteren bevorzugt n-Butylether, von Monoethylenglykol, Monopropylenglykol, Diethylenglykol und Dipropylenglykol. Selbstverständlich sind auch Mischungen aus den genannten Alkoholen, Polyhydroxyalkoholen und Ether verwendbar. Unter dem Begriff Propylenglykol sollen im Rahmen der vorliegenden Erfindung sowohl 1,2-Propandiol als auch 1,3-Propandiol verstanden werden.

In einer bevorzugten Ausführungsform enthält das erfindungsgemäße Gefrierschutzmittel-Konzentrat mit Korrosionsschutz als gefrierpunktserniedrigende Flüssigkeit (A) Monoethylenglykol, Monopropylenglykol oder Mischungen von Monoethylenglykol oder Monoproplyenglykol mit bis zu 35 Gew.-% Glycerin, jeweils bezogen auf die Gesamtmenge an gefrierpunktserniedrigender Flüssigkeit. Ganz besonders bevorzugt ist der Einsatz von Monoethylenglykol ohne Beimischungen anderer Alkohole oder Ether.

Das erfindungsgemäße Gefrierschutzmittel-Konzentrat mit Korrosionsschutz enthält als Korrosionsschutzmittel mindestens ein 2-Thiothiazol der allgemeinen Formel I 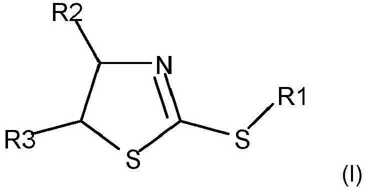 in der die Variable R1 einen Carboxyalkylrest der Formel -(CₘH₂ₘ)-COOX, wobei m für eine Zahl von 1 bis 4 steht und X Wasserstoff, ein Alkalimetallkation, ein Ammoniumkation oder ein substituiertes Ammoniumkation bedeutet, und die Variablen R2 und R3 unabhängig voneinander Wasserstoff oder eine C₁- bis C₄-Alkylgruppe bezeichnen, wobei R2 und R3 auch zusammen mit den beiden Ringkohlenstoffatomen des Thiazolringes, an die sie angeknüpft sind, einen fünf- oder sechsgliedrigen gesättigten oder ungesättigten Ring ausbilden können.

Der C₁- bis C₄-Alkylenrest in der Variablen R1 kann eine verzweigte Gruppierung wie 1,2-Propylen, 1,2-Butylen oder 2,3-Butylen oder eine lineare Polymethylengruppierung sein. Vorzugsweise bezeichnet R1 einen Rest der Formel -(CH₂)ₘ-COOX, in der m für die Zahl 1, 2, 3 oder 4, vorzugsweise für die Zahl 2 oder 3 steht.

Bezeichnen eine oder beide Variablen R2 und R3 C₁- bis C₄-Alkylgruppen, werden solche Alkylgruppen meist aus Methyl, Ethyl, n-Propyl, iso-Propyl, n-Butyl, iso-Butyl, sec.-Butyl und tert.-Butyl ausgewählt. Insbesondere bezeichnen R2 und R3 beide Wasserstoff oder eine dieser Variablen bezeichnet Wasserstoff und die andere Methyl oder Ethyl oder die beiden Variablen R2 und R3 bilden mit den beiden Ringkohlenstoff-atomen des Thiazolringes, an die sie angeknüpft sind, einen Benzolring (Benzanellanten) aus.

Bedeutet die Variable X ein Alkalimetallkation, ist dies beispielsweise Lithium oder vorzugsweise Natrium oder Kalium. Bedeutet die Variable X ein unsubstituiertes Ammoniumkation, leitet sich dieses von Ammoniak (NH₃) ab. Bedeutet die Variable X ein substituiertes Ammoniumkation, leitet sich dieses beispielsweise von Mono-, Di- oder Trialkylaminen wie Mono-, Di- oder Triethylamin oder von Trialkanolaminen wie Triethanolamin oder Triisopropanolamin ab.

Einzelne besonders bevorzugte Korrosionsschutzmittel sind (2-Benzothiazylthio)-essigsäure, 3-(2-Benzothiazylthio)-propionsäure oder ein Alkalimetall-, Ammonium- oder substituierten Ammoniumsalz hiervon. Die beiden genannten Korrosionsschutzmittel sind im Handel unter der Bezeichnung Sanbit® ABT und Danbit® PBT erhältlich (Hersteller: Sanshin Chemical Industry).

In der Ausführungsform (B3) für das Korrosionsschutzmittel (B) enthält die mindestens eine schwefelhaltige organische Verbindung ein schwefelhaltige aliphatische Carbonsäure. Die Verbindungen (B3) können eine oder mehrere, insbesondere 1, 2 oder 3 Carboxylfunktionen enhalten. Der hierin enthaltende Schwefel kann beispielsweise als Sulfid-, Sulfoxid- oder Sulfon-Funktion vorliegen. Die Verbindungen (B3) können im Molekül noch Hydrocarbylreste aliphatischer, cycloaliphatischer und/oder araliphatischer Natur sowie gegebenenfalls noch weitere Heteroatome und/oder funktionelle Gruppen enthalten.

In einer bevorzugten Ausführungsform enthält das erfindungsgemäße Gefrierschutzmittel-Konzentrat mit Korrosionsschutz als Korrosionsschutzmittel (B3) mindestens eine schwefelhaltige aliphatische Carbonsäure ausgewählt aus 2,2-Mercaptodiessigsäure, (Thiobenzoylthio)-essigsäure, 2-Hydroxyalkylcarboxylalkylsulfiden, 2-Hydroxy-alkylcarboxylalkylsulfoxiden und deren Alkalimetall-, Ammonium- und substituierten Ammoniumsalzen. 2,2-Mercaptodiessigsäure (auch als Thiodiglykolsäure bezeichnet: HOOC-CH₂-S-CH₂-COOH) und (Thiobenzoylthio)-essigsäure (Ph-CS-S-CH₂-COOH) sind im Handel erhältlich. 2-Hydroxyalkylcarboxylalkylsulfide und 2-Hydroxyalkylcarboxylalkylsulfoxide der Formel Alkyl-CH(OH)-CH₂-S(=O)ₙ-Alkylen-COOH sind in der EP 0 025 125 A1 als Korrosionsinhibitoren für die Behandlung von wasserführenden Anlagen wie Dampferzeugungsanlagen, Heizsysteme, Kühlwasserkreisläufe und Wasserleitungssysteme beschrieben.

Das Korrosionsschutzmittel (C) werden üblicherweise die Alkalimetall-, Ammonium- oder substituierten Ammoniumsalze der Molybdänsäure H₂MoO₄ oder die Säure selbst eingesetzt, wobei Alkalimetall-, Ammonium- oder substituierten Ammoniumsalze die oben genannte Bedeutung haben. Im erfindungsgemäßen Konzentrat, welches normalerweise einen pH-Wert von 4 bis 11 aufweist, liegt die Komponente (C) dann jedoch in der Regel ganz oder überwiegend in Salzform vor. Es können auch Mischungen hieraus eingesetzt werden. Typische Vertreter für solche Molybdate (C) sind Natriummolybdat und Kaliummolybdat.

Das Korrosionsschutzmittel (D) werden üblicherweise die Alkalimetall-, Ammonium- oder substituierten Ammoniumsalze der ortho-Phosphorsäure H₃PO₄ oder die Säure selbst eingesetzt, wobei Alkalimetall-, Ammonium- oder substituierten Ammoniumsalze die oben genannte Bedeutung haben. Im erfindungsgemäßen Konzentrat, welches normalerweise einen pH-Wert von 4 bis 11, insbesondere von 7 bis 11, aufweist, liegt die Komponente (D) dann jedoch in der Regel ganz oder überwiegend in Salzform vor. Wenn freie ortho-Phosphorsäure eingesetzt wird, wird diese üblicherweise mit Natrium- oder Kaliumhydroxid, Ammoniak oder den entsprechenden Aminen in die gewünschten Salze übergeführt. Weiterhin eignen sich als Komponente (D) auch Alkalimetall-, Ammonium- oder substituierten Ammoniumsalze der Diphosphorsäure, der Metaphosphorsäuren, der Pyrophosphorsäuren und/oder der Polyphosphorsäuren oder die Säuren selbst, wobei Alkalimetall-, Ammonium- oder substituierten Ammoniumsalze die oben genannte Bedeutung haben. Es können auch Mischungen aus den genannten Salzen und/oder Säuren eingesetzt werden. Typische Vertreter für solche Phosphate (D) sind Natriumdihydrogenphosphat, Dinatriumhydrogenphosphat, Trinatriumphosphat, Natriumdiphosphat, Tetranatriumpyrophosphat, Natriumtripolyphosphat, Natriumhexametaphosphat sowie die hierzu analogen Kaliumsalze.

Als Korrosionsschutzmittel kommen zusätzlich zu der erfindungsgemäßen Gruppe (E1) einzelne Vertreter oder Mischungen solcher Vertreter aus der folgenden Gruppe (E2) von Carbonsäuren in Betracht:
(E1) aliphatische, cycloaliphatische oder aromatische Monocarbonsäuren mit jeweils 3 bis 16 Kohlenstoffatomen in Form deren Alkalimetall-, Ammonium- oder substituierten Ammoniumsalze;
(E2) aliphatische oder aromatische Di- oder Tricarbonsäuren mit jeweils 3 bis 21 Kohlenstoffatomen in Form deren Alkalimetall-, Ammonium- oder substituierten Ammoniumsalze.

Als lineare oder verzweigtkettige aliphatische oder cycloaliphatische Monocarbonsäuren der Gruppe (E1) kommen beispielsweise Propionsäure, Pentansäure, Hexansäure, Cyclohexylessigsäure, Octansäure, 2-Ethylhexansäure, Nonansäure, Isononansäure, Decansäure, Neodecansäure, Undecansäure oder Dodecansäure in Betracht. Als aromatische Monocarbonsäuren der Gruppe (E1) eignet sich insbesondere Benzoesäure, daneben kommen aber auch beispielsweise C₁- bis C₈-Alkylbenzoesäuren wie o-, m- oder p-Methylbenzoesäure oder p-tert.-Butylbenzoesäure, hydroxylgruppen-haltige aromatische Monocarbonsäuren wie o-, m- oder p-Hydroxybenzoesäure oder p-(Hydroxymethyl)-benzoesäure oder Halogenbenzoesäuren wie o-, m- oder p-Fluor-benzoesäure in Betracht.

Typische Beispiele für Di- oder Tricarbonsäuren der Gruppe (E2) sind Malonsäure, Bernsteinsäure, Glutarsäure, Pimelinsäure, Korksäure, Azelainsäure, Sebacinsäure, Undecandisäure, Dodecandisäure, Dicyclopentadiendicarbonsäure, Terephthalsäure, Phthalsäure und Triazintriiminocarbonsäuren wie 6,6',6"-(1,3,5-Triazin-2,4,6-triyltriimino)-trihexansäure.

Die genannten Carbonsäuren (E1) und (E2) liegen üblicherweise ganz oder überwiegend als Alkalimetall-, Ammonium- oder substituierten Ammoniumsalze - wie sie oben definiert sind - vor, auch wenn sie als frei Säuren bei der Herstellung des erfindungsgemäßen Gefrierschutzmittel-Konzentrates zugesetzt worden sein sollten, da das Konzentrat normalerweise einen pH-Wert von 4 bis 11, insbesondere von 7 bis 11, aufweist. Als freie Carbonsäuren eingesetzte Komponenten (E1) und (E2) werden üblicherweise mit Natrium- oder Kaliumhydroxid, Ammoniak oder den entsprechenden Aminen in die gewünschten Salze übergeführt.

Für die Lösung der eingangs gestellten Aufgabe ist das Zusammenwirken der Korrosionsschutzmittel (B) bis (E1) in der gefrierpunktserniedrigenden Flüssigkeit (A) maßgeblich. Darüber hinaus kann das erfindungsgemäße Gefrierschutzmittel-Konzentrat mit Korrosionschutz noch weitere Korrosionsschutzmittel und/oder sonstige Additivkomponenten, jeweils einzeln oder in Mischungen und in den hierfür üblichen Mengen, enthalten.

Als weitere Korrosionsschutzmittel (F) bis (K) kommen in Betracht:
(F) als anorganische Salze Alkalimetallborate, Alkalimetallsilikate, Alkalimetallnitrite, Alkalimetall- oder Erdalkalimetallnitrate und/oder Alkalimetall- oder Erdalkalimetallfluoride;
(G) aliphatische, cycloaliphatische oder aromatischen Amine mit 2 bis 15 Kohlenstoffatomen, die zusätzlich Ethersauerstoffatome oder Hydroxylgruppen enthalten können;
(H) ein- oder zweikernige ungesättigte oder teilungesättigte Heterocyclen mit 4 bis 10 Kohlenstoffatomen, die benzanelliert sein und/oder zusätzliche funktionelle Gruppen tragen können;
(J) Tetra-(C₁-C₈-alkoxy)-silane (Orthokieselsäure-tetra-C₁-C₈-alkylester);
(K) Carbonsäure- oder Sulfonsäureamide.

Zusätzlich zu den genannten Korrosionsschutzmitteln (B) bis (K) können beispielsweise auch noch lösliche Salze des Magnesiums von organischen Säuren wie Magnesiumbenzolsulfonat, Magnesiummethansulfonat, Magnesiumacetat oder Magnesiumpropionat, Hydrocarbazole oder quaternierte Imidazole, wie sie in der DE-A 196 05 509 beschrieben sind, in üblichen Mengen als weitere Inhibitoren eingesetzt werden.

Typische Beispiele für anorganische Salze (F) sind Natriumtetraborat (Borax), Natrium-metasilikat, Natriumnitrit, Natriumnitrat, Magnesiumnitrat, Natriumfluorid, Kaliumfluorid und Magnesiumfluorid. Bei Mitverwendung von Alkalimetallsilikaten und Alkalimetallmetasilikaten werden diese zweckmäßigerweise durch übliche Organosilicophosphonate oder Organosilicosulfonate in üblichen Mengen stabilisiert.

Die Amine (G) weisen vorzugsweise 2 bis 9, insbesondere 4 bis 8 Kohlenstoffatome auf. Die Amine (G) sind vorzugsweise tertiäre Amine. Die Amine (G) enthalten vorzugsweise 0 bis 3 Ethersauerstoffatome oder 0 bis 3 Hydroxylgruppen. Typische Beispiele für die Amine (G) sind Ethylamin, Propylamin, iso-Propylamin, n-Butylamin, iso-Butylamin, sec-Butylamin, tert.-Butylamin, n-Pentylamin, n-Hexylamin, n-Heptylamin, n-Octylamin, 2-Ethylhexylamin, n-Nonylamin, iso-Nonylamin, Di-n-propylamin, Diiso-propylamin, Di-n-butylamin, Mono-, Di- und Triethanolamin, Mono-, Di- und Triisopropanolamin, Piperidin, Morpholin, Cyclohexylamin, Anilin und Benzylamin. Aliphatische und cycloaliphatische Amine (G) sind in der Regel gesättigt.

Bei den Heterocyclen (H) handelt es sich insbesondere um einkernige fünf- oder sechsgliedrige Systeme mit 1, 2 oder 3 Stickstoffatomen, welche benzanelliert sein können. Es können aber auch zweikernige Systeme mit fünf- und/oder sechsgliedrigen heterocyclischen Teilringen mit typischerweise insgesamt 2, 3 oder 4 Stickstoffatomen eingesetzt werden. Die Heterocyclen (H) können zusätzliche funktionelle Gruppen wie C₁- bis C₄-Alkoxy, gegebenenfalls substituiertes Amino oder Mercapto tragen. Das heterocyclische Grundgerüst kann selbstverständlich auch Alkylgruppen, insbesondere C₁- bis C₄-Alkylgruppen, tragen. Typische Beispiele für Heterocyclen (H) sind Benzotriazol, Tolutriazol (Tolyltriazol), hydriertes Tolutriazol, 1H-1,2,4-Triazol, Benzimidazol, Benzthiazol, Adenin, Purin, 6-Methoxypurin, Indol, Isoindol, Isoindolin, Pyridin, Pyrimidin, 3,4-Diaminopyridin, 2-Aminopyrimidin und 2-Mercaptopyrimidin.

Für die Silane (J) kommen beispielsweise Tetramethoxysilan, Tetraethoxysilan, Tetra-n-propoxysilan oder Tetra-n-butoxysilan in Frage.

Typische Beispiele für die hier einsetzbaren aromatischen, heteroaromatischen, aliphatischen und cycloaliphatischen (mit der Amidgruppe als Bestandteil des Ringes) Carbonsäureamide sowie für die hier einsetzbaren aliphatischen und aromatischen Sulfonsäureamide (K) sind in der DE-A 100 36 031 aufgeführt. Stellvertretend für alle dort genannten Amide seien hier nur die folgenden als Beispiele genannt: Adipinsäurediamid, Benzamid, Anthranilsäureamid, 3- und 4-Aminobenzamid, N-Methyl-2-pyrrolidon, Picolinsäureamid, Nicotinsäureamid, Benzolsulfonamid, o- und p-Toluolsulfonamid und 2-Aminobenzolsulfonamid.

Als sonstige Additivkomponenten (L) bis (O) kommen in Betracht:
(L) Hartwasserstabilisatoren auf Basis von Polyacrylsäure, Polymaleinsäure, Acrylsäure-Maleinsäure-Copolymeren, Polyvinylpyrrolidon, Polyvinylimidazol, Vinylpyrrolidon-Vinylimidazol-Copolymeren und/oder Copolymeren aus ungesättigten Carbonsäuren und Olefinen; ein im Handel erhältlicher diesbezüglicher Hartwasserstabilisator ist Sokalan® CP 42;
(M) Entschäumer;
(N) Farbstoffe;
(O) Bitterstoffe aus Gründen der Hygiene und der Sicherheit im Falle eines Verschluckens, zum Beispiel Bitterstoffe vom Typ Denatoniumbenzoat;

Die Menge an gefrierpunktserniedrigender Flüssigkeit (A) im erfindungsgemäßen Gefrierschutzmittel-Konzentrat beträgt üblicherweise mindestens 75 Gew.-%, vorzugsweise mindestens 80 Gew.-%, insbesondere mindestens 85 Gew.-%, vor allem mindestens 90 Gew.-%, jeweils bezogen auf die Gesamtmenge des Konzentrates.

Die Gesamtmenge an Korrosionsschutzmitteln (B) bis (K) im erfindungsgemäßen Gefrierschutzmittel-Konzentrat beträgt üblicherweise 1 bis 70 Gew.-%, vorzugsweise 2 bis 35 Gew.-%, insbesondere 2,5 bis 15 Gew.-%, vor allem 3 bis 10 Gew.-%, jeweils bezogen auf die Gesamtmenge des Konzentrates.

Die Menge an schwefelhaltiger organischer Verbindung im erfindungsgemäßen Gefrierschutzmittel-Konzentrat beträgt üblicherweise 0,01 bis 5 Gew.-%, vorzugsweise 0,03 bis 3 Gew.-%, vor allem 0,07 bis 1 Gew.-%, jeweils bezogen auf die Gesamtmenge des Konzentrates.

Die Menge an anorganischem Molybdatsalz (C) im erfindungsgemäßen Gefrierschutzmittel-Konzentrat beträgt üblicherweise 0,001 bis 2 Gew.-%, insbesondere 0,003 bis 1 Gew.-%, vor allem 0,007 bis 0,5 Gew.-%, jeweils bezogen auf die Gesamtmenge des Konzentrates.

Die Menge an anorganischem Phosphatsalz (D) im erfindungsgemäßen Gefrierschutz-mittel-Konzentrat beträgt üblicherweise 0,1 bis 8 Gew.-%, insbesondere 0,1 bis 5 Gew.-%, vor allem 0,1 bis 3 Gew.-%, jeweils bezogen auf die Gesamtmenge des Konzentrates.

Die Menge an linearer oder verzweigtkettiger aliphatischer oder cycloaliphatischer Monocarbonsäure (E1) im erfindungsgemäßen Gefrierschutzmittel-Konzentrat beträgt üblicherweise 0,1 bis 10 Gew.-%, insbesondere 0,5 bis 8 Gew.-%, vor allem 1 bis 5 Gew.-%, jeweils bezogen auf die Gesamtmenge des Konzentrates.

Die Menge an anorganischem Borat-, Silikat-, Nitrit-, Nitrat- und/oder Fluoridsalz (F) im erfindungsgemäßen Gefrierschutzmittel-Konzentrat beträgt üblicherweise 0 bis 2 Gew.-%, insbesondere 0,01 bis 2 Gew.-%, vor allem 0,1 bis 1 Gew.-%, jeweils bezogen auf die Gesamtmenge des Konzentrates.

Die Menge an aliphatischem, cycloaliphatischem und/oder aromatischem Amin (G) im erfindungsgemäßen Gefrierschutzmittel-Konzentrat beträgt üblicherweise 0 bis 5 Gew.-%, insbesondere 0,01 bis 5 Gew.-%, vor allem 0,1 bis 3 Gew.-%, jeweils bezogen auf die Gesamtmenge des Konzentrates.

Die Menge an ein- oder zweikernigen Heterocyclen (H) im erfindungsgemäßen Gefrierschutzmittel-Konzentrat beträgt üblicherweise 0 bis 5 Gew.-%, insbesondere 0,01 bis 5 Gew.-%, vor allem 0,05 bis 2 Gew.-%, jeweils bezogen auf die Gesamtmenge des Konzentrates.

Die Menge an Tetra-(C₁-C₈-alkoxy)-silanen (J) im erfindungsgemäßen Gefrierschutzmittel-Konzentrat beträgt üblicherweise 0 bis 5 Gew.-%, insbesondere 0,01 bis 5 Gew.-%, vor allem 0,1 bis 2 Gew.-%, jeweils bezogen auf die Gesamtmenge des Konzentrates.

Die Menge an Carbonsäure- und/oder Sulfonsäureamid (K) im erfindungsgemäßen Gefrierschutzmittel-Konzentrat beträgt üblicherweise 0 bis 10 Gew.-%, insbesondere 0,01 bis 10 Gew.-%, vor allem 0,1 bis 5 Gew.-%, jeweils bezogen auf die Gesamtmenge des Konzentrates.

Die Menge an Hartwasserstabilisatioren (L) im erfindungsgemäßen Gefrierschutzmittel-Konzentrat beträgt üblicherweise 0 bis 1 Gew.-%, insbesondere 0,01 bis 1 Gew.-%, vor allem 0,05 bis 0,5 Gew.-%, jeweils bezogen auf die Gesamtmenge des Konzentrates.

Die Menge an Entschäumer (M) im erfindungsgemäßen Gefrierschutzmittel-Konzentrat beträgt üblicherweise 0 bis 0,5 Gew.-%, insbesondere 0,001 bis 0,05 Gew.-%, vor allem 0,002 bis 0,02 Gew.-%, jeweils bezogen auf die Gesamtmenge des Konzentrates.

Die Menge an Farbstoff (N) im erfindungsgemäßen Gefrierschutzmittel-Konzentrat beträgt üblicherweise 0 bis 0,05 Gew.-%, insbesondere 0,001 bis 0,05 Gew.-%, jeweils bezogen auf die Gesamtmenge des Konzentrates.

Die Menge an Bitterstoff (O) im erfindungsgemäßen Gefrierschutzmittel-Konzentrat beträgt üblicherweise 0 bis 0,05 Gew.-%, insbesondere 0,001 bis 0,05 Gew.-%, jeweils bezogen auf die Gesamtmenge an Konzentrat.

Das erfindungsgemäße Gefrierschutzmittel-Konzentrat kann außerdem noch geringe Mengen an Wasser, meist 0 bis 10 Gew.-%, insbesondere 0 bis 5 Gew.-%, jeweils bezogen auf die Gesamtmenge des Konzentrates, enthalten. Die Gesamtmenge aller im erfindungsgemäßen Gefrierschutzmittel-Konzentrat enthaltenen Komponenten (einschließlich des Wassers) beträgt in allen Fällen 100,0 Gew.-%.

In einer bevorzugten Ausführungsform enthält das erfindungsgemäße Gefrierschutzmittel-Konzentrat 75 bis 99,5 Gew.-% der gefrierpunktserniedrigenden Flüssigkeit (A), in Summe 0,5 bis 25 Gew.-% der Korrosionsschutzmittel (B) bis (E1), 0 bis 10 Gew.-% weiterer von (B) bis (E1) verschiedener, normalerweise aus den genannten Gruppen (F) bis (K) ausgewählte Korrosionsschutzmittel sowie 0 bis 10 Gew.-% Wasser.

Das erfindungsgemäße Gefrierschutzmittel-Konzentrat kann durch einfaches Mischen der einzelnen Komponenten hergestellt werden. Das erfindungsgemäße Gefrierschutzmittel-Konzentrat kann jedoch auch durch Verdünnen eines entsprechenden Superkonzentrates, in dem die Wirkkomponenten (B) bis (O) in höherer Konzentration vorliegen, mit der als Gefrierschutzkomponente fungierenden gefrierpunktserniedrigenden Flüssigkeit (A) und gegebenenfalls etwas Wasser hergestellt werden. Der Anteil des Superkonzentrates am Konzentrat beträgt in der Regel 3 bis 60 Gew.-%. Superkonzentrate werden - meist für Transportzwecke - aus normalkonzentrierten Konzentraten durch Entzug einer solchen Menge an Gefrierschutzkomponente, dass die weiteren Bestandteile gerade noch in gelöster Form vorliegen, erzeugt.

Gegenstand der vorliegenden Erfindung ist auch eine wässrige Kühlmittelzusammensetzung, welche 10 bis 90 Gew.-%, insbesondere 20 bis 60 Gew.-%, des erfindungsgemäßen Gefrierschutzmittel-Konzentrates enthält. Die erfindungsgemäße wässrige Kühlmittelzusammensetzung wird üblicherweise aus dem erfindungsgemäßen Gefrierschutzmittel-Konzentrat durch Verdünnen mit der entsprechenden Menge an Wasser hergestellt.

Ein weiterer Gegenstand der vorliegenden Anmeldung ist die Verwendung der genannten erfindungsgemäßen wässrigen Kühlmittelzusammensetzung zur Kühlung eines Verbrennungsmotors, dessen Kühlvorrichtung überwiegend oder alleinig aus Aluminium unter Verwendung eines Lötverfahrens mit einem Fluoroaluminat-Flussmittel hergestellt worden ist. Dadurch wird das eingangs geschilderte Problem der Ausfällungen von Aluminiumhydroxid-Gelen und der Verschlammung des Kühlkreislaufes bei derartigen Kühlvorrichtungen in hervorragender Weise gelöst. Die erfindungsgemäße wässrige Kühlmittelzusammensetzung weist somit gegenüber Rückständen aus Fluoroaluminat-Flussmitteln eine deutlich höhere Toleranz auf und bewirkt dadurch einen effektiveren Korrosionsschutz.

Ein Reihe der genannten schwefelhaltigen organischen Verbindungen (B) eignet sich darüber hinaus generell als außerordentlich gut wirksame Korrosionsschutzmittel in Gefrierschutzmittel-Konzentraten - auch in Kühlvorrichtungen und Wärmeträgerkreisläufen, die keine unter Verwendung von Fluoroaluminat-Flussmitteln gelöteten Aluminiumkühler enthalten. Daher ist auch Gegenstand der vorliegenden Erfindung die Verwendung von (2-Benzothiazylthio)-essigsäure, 3-(2-Benzothiazylthio)-propionsäure, 2,2-Mercaptodiessigsäure, (Thiobenzoylthio)-essigsäure, 2-Hydroxyalkylcarboxylalkyl-sulfiden, 2-Hydroxyalkylcarboxylalkylsulfoxiden und deren Alkalimetall-, Ammonium- und substituierten Ammoniumsalzen als Korrosionsschutzmittel in Gefrierschutzmittel-Konzentraten auf Basis von gefrierpunktserniedrigenden Flüssigkeiten als Hauptbestandteil, die aus einwertigen, zweiwertigen und dreiwertigen Alkoholen, Polyhydroxyalkoholen, deren Ethern und Mischungen hieraus ausgewählt sind, und in daraus hergestellten wässrigen Kühlmittelzusammensetzungen.

Die nachfolgenden Beispiele sollen die vorliegende Erfindung erläutern, ohne sie zu beschränken.

### Beispiele

Die nachfolgenden Korrosionsversuche wurden gemäß ASTM D 4340 durchgeführt. Dieser Standardtest dient zur Bestimmung der Korrosionsanfälligkeit von Aluminium oder Aluminiumlegierungen in Kühlvorrichtungen für Verbrennungsmotoren. Die hierfür verwendete Standardapparatur simuliert die aluminiumhaltige heiße innere Oberfläche eines Kühlkreislaufes eines Verbrennungsmotors. Eine Aluminiumtestplatte wird von unten aufgeheizt, während sie auf ihrer Oberseite mit der zu testenden Kühlflüssigkeit in Kontakt steht. Die Testtemperatur beträgt 135°C. Nach Abschluss des Testes nach der festgelegten Testdauer von 168 Stunden wird die Platte visuell auf Korrosion beurteilt und die Gewichtsänderung (vor oder nach Beizen) durch Wiegen bestimmt.

**Verwendete Kühlmittelzusammensetzungen KM1 bis KM6 [Komponenten in Gew.-%]:**

| Komponente | KM1 | KM2 | KM3 | |
|---|---|---|---|---|
| Monoethylenglykol | 91,77 | 90,95 | 90,96 | |
| (2-Benzothiazylthio)-essigsäure | 0 | 0,15 | 0,15 | |
| Natriummolybdat | 0 | 0,2 | 0,2 | |
| Phosphorsäure (75 Gew.-% in Wasser) | 0 | 0,15 | 0,15 | |
| Acelainsäure | 3,0 | 3,0 | 0 | |
| Sebacinsäure | 0 | 0 | 3,0 | |
| Isononansäure | 0,6 | 0,6 | 0,6 | |
| Tolutriazol | 0,1 | 0,1 | 0,15 | |
| handelsübliches Tetraalkoxysilan | 0,27 | 0,27 | 0,43 | |
| handelsüblicher Hartwasserstabilisator | 0,15 | 0,15 | 0,15 | |
| Denatoniumbenzoat | 0,01 | 0,01 | 0,01 | |
| Handelsüblicher Entschäumer | 0,01 | 0,01 | 0,01 | |
| Kaliumhydroxid (48 Gew.-% in Wasser) | 4,09 | 4,41 | 4,19 | |
| | | | | |

| Komponente | KM4 | KM5 | KM6 | KM7 |
|---|---|---|---|---|
| Monoethylenglykol | 90,55 | 92,55 | 92,55 | 92,55 |
| (2-Benzothiazylthio)-essigsäure | 0 | 0 | 0 | 0,1 |
| 2-Mercaptobenzthiazol | 0 | 0 | 0,1 | 0 |
| 2,2-Mercaptodiessigsäure | 0 | 0,1 | 0 | 0 |
| Natriummolybdat | 0,01 | 0,01 | 0,01 | 0,01 |
| Phosphorsäure (75 Gew.-% in Wasser) | 1,33 | 1,33 | 1,33 | 1,33 |
| 2-Ethylhexansäure | 3,0 | 3,0 | 3,0 | 3,0 |
| Tolutriazol | 0,1 | 0,1 | 0,1 | 0,1 |
| handelsübliches Tetraalkoxysilan | 0,43 | 0,43 | 0,43 | 0,43 |
| handelsüblicher Hartwasserstabilisator | 0,15 | 0,15 | 0,15 | 0,15 |
| Denatoniumbenzoat | 0,01 | 0,01 | 0,01 | 0,01 |
| Kaliumhydroxid (48 Gew.-% in Wasser) | 4,42 | 2,32 | 2,32 | 2,32 |

Die Kühlmittelzusammensetzungen KM1 bis KM7 wurden jeweils für die Testdurchführung im Vol.-Verhältnis von 50 : 50 mit deionisiertem Wasser verdünnt.

### Korrosionstest mit KM1 und KM2 mit KAlF₄ gemäß ASTM D 4340 (nach Beizen):

KM1 (zum Vergleich), KM2 (erfindungsgemäß) und KM3 (erfindungsgemäß) wurden zur Simulation der Belastung mit Flussmittel jeweils vor dem Test mit 600 mg Kaliumtetrafluoroaluminat pro Liter der Kühlmittelzusammensetzung versetzt. Bei KM1 war die Aluminiumtestplatte nach dem Test schwarz angelaufen und wies eine starke Korrosion auf; die Gewichtsänderung betrug +2,90 mg/cm². Bei KM2 und KM3 waren die Aluminiumtestplatte unverändert und ohne Belag und wiesen keine Korrosionserscheinungen auf; die Gewichtsänderung war nur minimal und betrug jeweils -0,19 mg/cm².

### Korrosionstest mit KM4 bis KM7 mit KAlF₄ gemäß ASTM D 4340 (ohne Beizen):

KM4 (zum Vergleich), KM5 (zum Vergleich), KM6 (zum Vergleich) und KM7 (erfindungsgemäß) wurden zur Simulation der Belastung mit Flussmittel jeweils vor dem Test mit 300 mg Kaliumtetrafluoroaluminat pro Liter der Kühlmittelzusammensetzung versetzt; KM7 wurde in einem zweiten Testdurchgang (KM7a, erfindungsgemäß) vorher mit der doppelten Menge an KAlF₄ (600 mg pro Liter) versetzt. Bei KM4 wies die Aluminiumtestplatte nach dem Test deutliche Korrosionsspuren auf; die Gewichtsänderung betrug -0,34 mg/cm². Bei KM5, KM6, KM7 und KM7a waren die Aluminiumtestplatten jeweils leicht angelaufen und zeigten einen Belag; die Gewichtsänderungen waren minimal und betrugen bei KM5 -0,12 mg/cm², bei KM6 +0,06 mg/cm², bei KM7 +0,04 mg/cm² und bei KM7a +0,07 mg/cm².

### Korrosionstest mit KM4, KM5 und KM7ohne KAlF₄ gemäß ASTM D 4340 (ohne Beizen):

KM4 (zum Vergleich), KM5 (zum Vergleich) und KM7 (erfindungsgemäß) wurden ohne vorherige Beimischung von KAlF₄ dem Korrosionstest unterzogen. Bei KM4 wies die Aluminiumtestplatte nach dem Test ebenfalls deutliche Korrosionsspuren auf; die Gewichtsänderung betrug wiederum -0,34 mg/cm². Bei KM5 und KM7 waren die Aluminiumtestplatten schillernd angelaufen; die Gewichtsänderungen waren minimal und betrugen bei KM5 -0,08 mg/cm² und bei KM7 0 mg/cm².

### Einfluss des Beizens und Bedeutung des Anlaufens bei den Aluminiumtestplatten:

Zur Interpretation der Versuchsergebnisse ist anzumerken, dass beim Beizen der während des Testlaufes durch korrosiven Abtrag von der Testplatte und Wiederausfällung aus der Kühlflüssigkeit gebildete Belag vollständig oder zumindest größtenteils wieder entfernt wird. Dadurch resultiert eine nur schwach positive (wenn die Belagsentfernung durch das Beizen unvollständig ist) oder schwach negative Gewichtsänderung (wenn die Belagsentfernung durch das Beizen vollständig ist und somit der korrosive Abtrag von der Platte am Gewicht spürbar wird). Das Ausmaß der Belagsbildung beim Test und auch der nach dem Beizen noch zurückbleibende Belagsschicht sind ein Mass für die Korrosionsanfälligkeit. Ein Restbelag von +2,90 mg/cm² bei KM1 bedeutet somit eine hohe Korrosionsanfälligkeit gegenüber einem Wert von -0,19 mg/cm² bei KM2 bzw. KM3.

Ein schwarzes Anlaufen der Aluminiumtestplatten wie bei KM1, meist verbunden mit visuell sichtbaren Korrosionsschäden, ist ein Anzeichen von hoher Korrosionsanfälligkeit. Ein schillerndes Anlaufen wie bei KM5 und KM7 im Testlauf ohne Beizen bedeutet dagegen in der Regel die Ausbildung einer sehr dünnen Schutzschicht und ist Indiz für eine gute Korrosionsschutzwirkung.

## Patentansprüche

1. Gefrierschutzmittel-Konzentrat mit Korrosionsschutz, geeignet für Kühlmittel und Wärmeträgerflüssigkeiten, enthaltend
(A) als Hauptbestandteil mindestens eine gefrierpunktserniedrigende Flüssigkeit ausgewählt aus einwertigen, zweiwertigen und dreiwertigen Alkoholen, Polyhydroxyalkoholen, deren Ethern und Mischungen hieraus;
(B) mindestens eine schwefelhaltige organische Verbindung ausgewählt aus mindestens einem 2-Thiothiazol der allgemeinen Formel 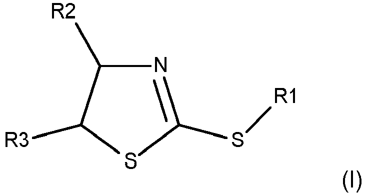 in der die Variable R1 einen Carboxyalkylrest der Formel -(CₘH₂ₘ)-COOX, wobei m für eine Zahl von 1 bis 4 steht und X Wasserstoff, ein Alkalimetallkation, ein Ammoniumkation oder ein substituiertes Ammoniumkation bedeutet, und die Variablen R2 und R3 unabhängig voneinander Wasserstoff oder eine C₁- bis C₄-Alkylgruppe bezeichnen, wobei R2 und R3 auch zusammen mit den beiden Ringkohlenstoffatomen des Thiazolringes, an die sie angeknüpft sind, einen fünf- oder sechsgliedrigen gesättigten oder ungesättigten Ring ausbilden können und
(B3) schwefelhaltigen aliphatischen Carbonsäuren,
als Korrosionsschutzmittel;
(C) mindestens ein anorganisches Molybdatsalz als weiteres Korrosionsschutzmittel;
(D) mindestens ein anorganisches Phosphatsalz als weiteres Korrosionsschutzmittel;
(E1) mindestens eine lineare oder verzweigtkettige aliphatische oder cycloaliphatische Monocarbonsäure in Form derer Alkalimetall-, Ammonium- oder substituierten Ammoniumsalze mit 3 bis 16 Kohlenstoffatomen im Säureteil.

2. Gefrierschutzmittel-Konzentrat mit Korrosionsschutz nach Anspruch 1, worin R1 einen Rest der Formel -(CH₂)ₘ-COOX bedeutet, in der m für die Zahl 1, 2, 3 oder 4 steht

3. Gefrierschutzmittel-Konzentrat mit Korrosionsschutz nach Anspruch 1 enthaltend als Korrosionsschutzmittel der Formel (I) (2-Benzothiazylthio)-essigsäure, 3-(2-Benzothiazylthio)-propionsäure oder ein Alkalimetall-, Ammonium- oder substituierten Ammoniumsalz hiervon.

4. Gefrierschutzmittel-Konzentrat mit Korrosionsschutz nach Anspruch 1 enthaltend als Korrosionsschutzmittel (B3) mindestens eine schwefelhaltige aliphatische Carbonsäure ausgewählt aus 2,2-Mercaptodiessigsäure, (Thiobenzoylthio)-essigsäure, 2-Hydroxyalkylcarboxylalkylsulfiden, 2-Hydroxyalkylcarboxylalkylsulfoxiden und deren Alkalimetall-, Ammonium- und substituierten Ammoniumsalzen.

5. Gefrierschutzmittel-Konzentrat mit Korrosionsschutz nach Anspruch 1 bis 4 enthaltend als gefrierpunktserniedrigende Flüssigkeit (A) Monoethylenglykol, Monopropylenglykol oder Mischungen von Monoethylenglykol oder Monoproplyenglykol mit bis zu 35 Gew.-% Glycerin, jeweils bezogen auf die Gesamtmenge an gefrierpunktserniedrigender Flüssigkeit.

6. Gefrierschutzmittel-Konzentrat mit Korrosionsschutz nach Anspruch 1 bis 5, in der die Verbindung (E1) ausgewählt ist aus der Gruppe bestehend aus Propionsäure, Pentansäure, Hexansäure, Cyclohexylessigsäure, Octansäure, 2-Ethylhexansäure, Nonansäure, Isononansäure, Decansäure, Neodecansäure, Undecansäure und Dodecansäure.

7. Gefrierschutzmittel-Konzentrat mit Korrosionsschutz nach Anspruch 1 bis 6 enthaltend 75 bis 99,5 Gew.-% der gefrierpunktserniedrigenden Flüssigkeit (A), in Summe 0,5 bis 25 Gew.-% der Korrosionsschutzmittel (B) bis (E1), 0 bis 10 Gew.-% weiterer von (B) bis (E) verschiedener Korrosionsschutzmittel sowie 0 bis 10 Gew.-% Wasser.

8. Gefrierschutzmittel-Konzentrat mit Korrosionsschutz nach Anspruch 7, zusätzlich enthaltend 0,01 bis 2 Gew.-% anorganische Salze Alkalimetallborate, Alkalimetallsilikate, Alkalimetallnitrite, Alkalimetall- oder Erdalkalimetallnitrate und/oder Alkalimetall- oder Erdalkalimetallfluoride

9. Wässrige Kühlmittelzusammensetzung enthaltend 10 bis 90 Gew.-% eines Gefrierschutzmittel-Konzentrates mit Korrosionsschutz gemäß den Ansprüchen 1 bis 8.

10. Verwendung einer wässrigen Kühlmittelzusammensetzung gemäß Anspruch 8 oder 9 zur Kühlung eines Verbrennungsmotors, dessen Kühlvorrichtung überwiegend oder alleinig aus Aluminium unter Verwendung eines Lötverfahrens mit einem Fluoroaluminat-Flussmittel hergestellt worden ist.

11. Verwendung einer wässrigen Kühlmittelzusammensetzung gemäß Anspruch 8 oder 9 zur Verringerung von Ausfällungen von Aluminiumhydroxid-Gelen aus Fluoroaluminat-Flussmitteln in Kühlkreisläufen.

12. Verfahren zur Verringerung von Ausfällungen von Aluminiumhydroxid-Gelen aus Fluoroaluminat-Flussmitteln in Kühlkreisläufen durch Einsatz von Kühlmittelzusammensetzung gemäß Anspruch 8 oder 9 in Kühlkreisläufen.

## Claims

1. An antifreeze concentrate with corrosion protection, suitable for coolants and heat transfer fluids, which comprises
(A) at least one freezing point-lowering liquid selected from among monohydric, dihydric and trihydric alcohols, polyhydroxy alcohols, their ethers and mixtures thereof as main constituent;
(B) at least one sulfur-comprising organic compound selected from among
at least one 2-thiothiazole of the general formula I 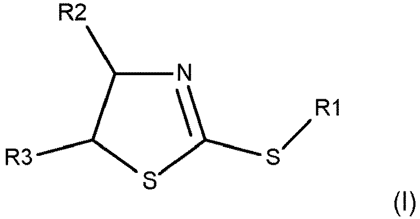 where the variable R1 is a carboxyalkyl radical of the formula -(CₘH₂ₘ)-COOX, where m is from 1 to 4 and X is hydrogen, an alkali metal cation, an ammonium cation or a substituted ammonium cation, and the variables R2 and R3 are each, independently of one another, hydrogen or a C₁-C₄-alkyl group, where R2 and R3 together with the two ring carbon atoms of the thiazole ring to which they are attached may also form a five- or six-membered saturated or unsaturated ring,
and
(B3) sulfur-comprising aliphatic carboxylic acids as corrosion inhibitor;
(C) at least one inorganic molybdate salt as further corrosion inhibitor;
(D) at least one inorganic phosphate salt as further corrosion inhibitor;
(E1) at least one linear or branched-chain aliphatic or cycloaliphatic monocarboxylic acid in the form of alkali metal, ammonium or substituted ammonium salts thereof having from 3 to 16 carbon atoms in the acid part.

2. The antifreeze concentrate with corrosion protection according to claim 1, where R1 is a radical of the formula -(CH₂)ₘ-COOX, where m is 1, 2, 3 or 4.

3. The antifreeze concentrate with corrosion protection according to claim 1 comprising (2-benzothiazylthio)acetic acid, 3-(2-benzothiazylthio)propionic acid or an alkali metal, ammonium or substituted ammonium salt thereof as corrosion inhibitor of the formula (I).

4. The antifreeze concentrate with corrosion protection according to claim 1 comprising at least one sulfur-comprising aliphatic carboxylic acid selected from among 2,2-mercaptodiacetic acid, (thiobenzoylthio)acetic acid, 2-hydroxyalkyl carboxylalkyl sulfides, 2-hydroxyalkyl carboxylalkyl sulfoxides and their alkali metal, ammonium and substituted ammonium salts as corrosion inhibitor (B3).

5. The antifreeze concentrate with corrosion protection according to any of claims 1 to 4 comprising monoethylene glycol, monopropylene glycol or mixtures of monoethylene glycol or monopropylene glycol with up to 35% by weight of glycerol as freezing point-lowering liquid (A), in each case based on the total amount of freezing point-lowering liquid.

6. The antifreeze concentrate with corrosion protection according to any of claims 1 to 5, wherein the compound (E1) is selected from the group consisting of propionic acid, pentanoic acid, hexanoic acid, cyclohexylacetic acid, octanoic acid, 2-ethylhexanoic acid, nonanoic acid, isononanoic acid, decanoic acid, neodecanoic acid, undecanoic acid and dodecanoic acid.

7. The antifreeze concentrate with corrosion protection according to any of claims 1 to 6 comprising from 75 to 99.5% by weight of the freezing point-lowering liquid (A), a total of from 0.5 to 25% by weight of the corrosion inhibitors (B) to (E1), from 0 to 10% by weight of further corrosion inhibitors which are different from (B) to (E) and from 0 to 10% by weight of water.

8. The antifreeze concentrate with corrosion protection according to claim 7, additionally comprising from 0.01 to 2% by weight of inorganic salts alkali metal borates, alkali metal silicates, alkali metal nitrites, alkali metal or alkaline earth metal nitrates and/or alkali metal or alkaline earth metal fluorides.

9. An aqueous coolant composition comprising from 10 to 90% by weight of an antifreeze concentrate with corrosion protection according to any of claims 1 to 8.

10. The use of an aqueous coolant composition according to claim 8 or 9 for cooling an internal combustion engine whose cooling apparatus has been made predominantly or solely of aluminum using a soldering process using a fluoroaluminate flux.

11. The use of an aqueous coolant composition according to claim 8 or 9 for reducing precipitates of aluminum hydroxide gels of fluoroaluminate fluxes in cooling circuits.

12. A process for reducing precipitates of aluminum hydroxide gels of fluoroaluminate fluxes in cooling circuits by using the coolant composition according to claim 8 or 9 in cooling circuits.

## Revendications

1. Concentré d'agent antigel avec protection anticorrosion, approprié pour des agents réfrigérants et des liquides caloporteurs, contenant :
(A) en tant que constituant principal, au moins un liquide abaissant le point de congélation choisi parmi les alcools monovalents, bivalents et trivalents, les polyhydroxy-alcools, leurs éthers et les mélanges de ceux-ci ;
(B) au moins un composé organique contenant du soufre, choisi parmi :
au moins un 2-thiothiazole de la formule générale I : 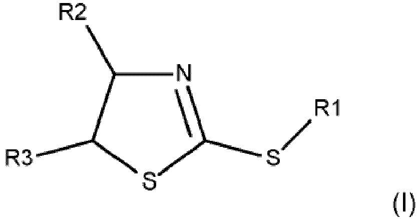 dans laquelle la variable R1 représente un radical carboxyalkyle de la formule -(CₘH₂ₘ)-COOX, dans laquelle m représente un nombre de 1 à 4 et X signifie l'hydrogène, un cation de métal alcalin, un cation ammonium ou un cation ammonium substitué, et les variables R2 et R3 désignent indépendamment l'une de l'autre l'hydrogène ou un groupe alkyle en C₁ à C₄, R2 et R3 pouvant également former conjointement avec les deux atomes de carbone de cycle du cycle thiazole auxquels ils sont reliés un cycle saturé ou insaturé à cinq ou six chaînons,
et
(B3) des acides carboxyliques aliphatiques contenant du soufre,
en tant qu'agent anticorrosion ;
(C) au moins un sel de molybdate inorganique en tant qu'agent anticorrosion supplémentaire ;
(D) au moins un sel de phosphate inorganique en tant qu'agent anticorrosion supplémentaire ;
(E1) au moins un acide monocarboxylique aliphatique ou cycloaliphatique, linéaire ou ramifié, sous la forme de ses sels de métal alcalin, d'ammonium ou d'ammonium substitué contenant 3 à 16 atomes de carbone dans la partie acide.

2. Concentré d'agent antigel avec protection contre la corrosion selon la revendication 1, dans lequel R1 signifie un radical de la formule -(CH₂)ₘ-COOX, dans laquelle m représente le nombre 1, 2, 3 ou 4.

3. Concentré d'agent antigel avec protection contre la corrosion selon la revendication 1, contenant en tant qu'agent anticorrosion de la formule (I) l'acide (2-benzothiazylthio)-acétique, l'acide 3-(2-benzothiazylthio)-propionique ou un sel de métal alcalin, d'ammonium ou d'ammonium substitué de ceux-ci.

4. Concentré d'agent antigel avec protection contre la corrosion selon la revendication 1, contenant en tant qu'agent anticorrosion (B3) au moins un acide carboxylique aliphatique contenant du soufre choisi parmi l'acide 2,2-mercaptodiacétique, l'acide (thiobenzoylthio)-acétique, les sulfures de 2-hydroxyalkylcarboxylalkyle, les 2-hydroxyalkylcarboxylalkylsulfoxydes et leurs sels de métal alcalin, d'ammonium et d'ammonium substitué.

5. Concentré d'agent antigel avec protection contre la corrosion selon les revendications 1 à 4, contenant en tant que liquide abaissant le point de congélation (A) du monoéthylène glycol, du monopropylène glycol ou des mélanges de monoéthylène glycol ou de monopropylène glycol avec jusqu'à 35 % en poids de glycérine, à chaque fois par rapport à la quantité totale de liquide abaissant le point de congélation.

6. Concentré d'agent antigel avec protection contre la corrosion selon les revendications 1 à 5, dans lequel le composé (E1) est choisi dans le groupe constitué par l'acide propionique, l'acide pentanoïque, l'acide hexanoïque, l'acide cyclohexylacétique, l'acide octanoïque, l'acide 2-éthylhexanoïque, l'acide nonanoïque, l'acide isononanoïque, l'acide décanoïque, l'acide néodécanoïque, l'acide undécanoïque et l'acide dodécanoïque.

7. Concentré d'agent antigel avec protection contre la corrosion selon les revendications 1 à 6, contenant 75 à 99,5 % en poids du liquide abaissant le point de congélation (A), au total 0,5 à 25 % en poids des agents anticorrosion (B) à (E1), 0 à 10 % en poids d'autres agents anticorrosion différents de (B) à (E), et 0 à 10 % en poids d'eau.

8. Concentré d'agent antigel avec protection contre la corrosion selon la revendication 7, contenant en outre 0,01 à 2 % en poids de sels inorganiques borates de métaux alcalins, silicates de métaux alcalins, nitrites de métaux alcalins, nitrates de métaux alcalins ou de métaux alcalino-terreux et/ou fluorures de métaux alcalins ou de métaux alcalino-terreux.

9. Composition aqueuse d'agent réfrigérant contenant 10 à 90 % en poids d'un concentré d'agent antigel avec protection contre la corrosion selon les revendications 1 à 8.

10. Utilisation d'une composition aqueuse d'agent réfrigérant selon la revendication 8 ou 9 pour le refroidissement d'un moteur à combustion, dont le dispositif de refroidissement a été essentiellement ou uniquement fabriqué en aluminium en utilisant un procédé de brasage avec un fondant à base de fluoroaluminate.

11. Utilisation d'une composition aqueuse d'agent réfrigérant selon la revendication 8 ou 9 pour réduire les précipitations de gels d'hydroxyde d'aluminium à partir de fondants à base de fluoroaluminate dans des circuits de refroidissement.

12. Procédé de réduction des précipitations de gels d'hydroxyde d'aluminium à partir de fondants à base de fluoroaluminate dans des circuits de refroidissement, utilisant une composition d'agent réfrigérant selon la revendication 8 ou 9 dans des circuits de refroidissement.
